# EUROPÄISCHE PATENTSCHRIFT

(11) **EP 3 967 198 B1**
(45) Veröffentlichungstag und Bekanntmachung des Hinweises auf die Patenterteilung: **04.06.2025**
(21) Anmeldenummer: 21194506.8
(22) Anmeldetag: 02.09.2021
(51) Int. Cl.: A47L 9/04, A47L 9/28, G05D 1/00

(54) **SICH SELBSTTÄTIG FORTBEWEGENDES BODENBEARBEITUNGSGERÄT**
AUTOMATIC SOIL PREPARATION EQUIPMENT
APPAREIL DE TRAITEMENT DU SOL AUTONOME

(30) Priorität: 09.09.2020 DE 102020123542
(43) Veröffentlichungstag der Anmeldung: 16.03.2022
(73) Patentinhaber: Vorwerk & Co. Interholding GmbH, 42275 Wuppertal (DE)
(72) Erfinder: Papenheim, Marc, 42349 Wuppertal (DE)
(74) Vertreter: Müller, Enno

(56) Entgegenhaltungen:
- EP-A1- 3 345 524
- EP-A2- 2 741 483
- DE-A1- 102015 006 014
- DE-A1- 102018 209 385
- US-A1- 2005 166 354

## Beschreibung

### Gebiet der Technik

Die Erfindung betrifft ein sich selbsttätig fortbewegendes Bodenbearbeitungsgerät mit einer elektromotorischen Antriebseinrichtung zur Fortbewegung des Bodenbearbeitungsgerätes innerhalb einer Umgebung, einer Hindernisdetektionseinrichtung zur Detektion von Hindernissen in der Umgebung, einer Sensorik zur Detektion eines Parameters einer von dem Bodenbearbeitungsgerät befahrenen Bodenfläche und einer Auswerte- und Steuereinrichtung zum Erstellen einer Umgebungskarte aus den detektierten Hindernisdaten und den Parametern.

### Stand der Technik

Sich selbsttätig fortbewegende Bodenbearbeitungsgeräte sind im Stand der Technik hinreichend bekannt. Diese können beispielsweise Reinigungsroboter wie Saug- und/oder Wischroboter, Polierroboter, Bohnerroboter, Mähroboter oder andere sein. Zur selbsttätigen Fortbewegung verfügen die Bodenbearbeitungsgeräte über eine Navigationseinrichtung, welche Umgebungsparameter erfasst und diese in einer Umgebungskarte abspeichert. Anhand der Umgebungskarte kann eine Auswerte- und Steuereinrichtung des Bodenbearbeitungsgerätes eine Verfahrroute planen, entlang welcher beispielsweise Bodenbearbeitungstätigkeiten durch das Bodenbearbeitungsgerät ausgeführt werden.

Es ist darüber hinaus im Stand der Technik bekannt, derartige Bodenbearbeitungsgeräte mit einer Bodendetektionseinrichtung auszustatten, welche Parameter des zu bearbeitenden Bodens aufnimmt, beispielsweise eine Bodenart detektiert. Ein als Reinigungsgerät ausgestattetes Bodenbearbeitungsgerät kann beispielsweise mittels einer solchen Detektionseinrichtung erkennen, ob es auf einem Teppichboden, einem Holzboden oder einem Fliesenboden verfährt, und in Abhängigkeit davon eine Bodenbearbeitungstätigkeit planen, insbesondere eine Bearbeitungsintensität, einen Wasserauftrag, eine Drehzahl eines rotierenden Bodenbearbeitungselementes, eine Saugleistungsstufe eines Sauggebläses oder ähnliches steuern. Ein solches Reinigungsgerät offenbart beispielsweise die EP 2 741 483 A2.

Als Detektionseinrichtungen zur Detektion einer Bodenart sind beispielsweise Kameras bekannt, die mit Hilfe einer Bildverarbeitungseinrichtung eine Struktur der Bodenfläche erkennen und diese als eine bestimmte Bodenart klassifizieren. Darüber hinaus ist es auch bekannt, Bodenbearbeitungsgeräte mit Widerstandssensoren oder Schlupfsensoren auszustatten, die einen Parameter detektieren, der von einer Reibung zwischen dem Bodenbearbeitungsgerät und der zu bearbeitenden Bodenfläche abhängig ist.

Obwohl sich derartige Bodenbearbeitungsgeräte und Bodendetektionseinrichtungen bewährt haben, um die Art von Bodenflächen der Umgebung zu erkennen und entsprechend in der Umgebungskarte zu vermerken, wird die Art der Bodenfläche nicht näher untersucht, beispielsweise in Bezug auf eine Vorzugsrichtung, die durch eine Verlegerichtung von Holzdielen oder Fliesen bedingt ist, oder durch eine Polrichtung von Teppichfasern.

### Zusammenfassung der Erfindung

Ausgehend von dem vorgenannten Stand der Technik ist es daher Aufgabe der Erfindung, weitere Eigenschaften der Bodenfläche zu untersuchen, welche vorteilhaft bei der Planung einer Verfahrstrategie des Bodenbearbeitungsgerätes berücksichtigt werden können.

Zur Lösung der vorgenannten Aufgabe wird vorgeschlagen, dass die Auswerte- und Steuereinrichtung des Bodenbearbeitungsgerätes eingerichtet ist, die Antriebseinrichtung des Bodenbearbeitungsgerätes so zu steuern, dass das Bodenbearbeitungsgerät um einen definierten Ortspunkt der Bodenfläche rotiert, wobei das Bodenbearbeitungsgerät eine Eigenrotation um den definierten Ortspunkt vollzieht und sich in einer 360 Grad-Drehung um sich selbst dreht und wobei die Auswerte- und Steuereinrichtung des Weiteren eingerichtet ist, den mittels der Sensorik während der Eigenrotation des Bodenbearbeitungsgerätes um den definierten Ortspunkt der Bodenfläche herum detektierten Parameter auszuwerten und eine Anisotropie des Parameters der Bodenfläche bezogen auf definierte unterschiedliche Raumrichtungen der Umgebung zu ermitteln und unter Angabe einer Winkelkoordinate in die Umgebungskarte einzutragen.

Erfindungsgemäß weist das Bodenbearbeitungsgerät nun eine Sensorik auf, die geeignet ist, eine Richtungsabhängigkeit von Bodenparametern der Bodenfläche zu detektieren. Eine solche Richtungsabhängigkeit ist gegeben, wenn die Bodenfläche bezogen auf verschiedene Raumrichtungen der Umgebung, insbesondere in verschiedene Richtungen parallel zu der Bodenfläche, unterschiedliche Eigenschaften aufweist. Ein Beispiel für eine Richtungsabhängigkeit von Bodeneigenschaften ist beispielsweise ein Holzboden, der in Faserrichtung des Holzes besser zu bearbeiten ist als orthogonal dazu. Ein anderes Beispiel ist ein Fliesenboden, dessen Fugenrichtung maßgeblich für zum Beispiel ein Reinigungsergebnis der Bodenfläche ist. Die Parameter der Bodenfläche müssen sich jedoch nicht nur auf Reinigungstätigkeiten beziehen, vielmehr kann es auch schlicht und einfach so sein, dass eine Bodenfläche in einer bestimmten Richtung besonders leicht zu überfahren ist, d. h. einen geringeren Reibwiderstand aufweist, als in einer anderen Richtung. Die richtungsabhängigen Eigenschaften des Bodens, d. h. die Anisotropie des Bodens, kann dann bei der Planung einer Fahrstrategie des Bodenbearbeitungsgerätes mit berücksichtigt werden. Die Richtungsabhängigkeit der Bodeneigenschaften wird vorzugsweise zunächst über die gesamte Bodenfläche erfasst, wobei bevorzugt an einer Vielzahl von Ortspunkten eine erfindungsgemäße Detektion der Anisotropie erfolgt. Dies bedeutet, dass die Detektionseinrichtung nacheinander an verschiedenen Ortspunkten der Umgebung um den jeweiligen definierten Ortspunkt rotiert, wobei die Auswerte- und Steuereinrichtung anschließend den detektieren Parameter auswertet und eine winkelabhängige Anisotropie ausgehend von dem jeweiligen Ortspunkt bestimmt. Durch die Kenntnis des aktuellen Ortes und der aktuellen Orientierung des Bodenbearbeitungsgerätes innerhalb der Umgebung bzw. innerhalb einer Umgebungskarte, kann dann von einer bezogen auf den momentanen Ortspunkt des Bodenbearbeitungsgerätes lokal definierten Richtung auf eine globale Richtung der Umgebung innerhalb der Umgebungskarte geschlossen werden. Somit lassen sich dann die Messwerte, die an verschiedenen Ortspunkten der Umgebung detektiert wurden, in einer gemeinsamen globalen Umgebungskarte zusammenführen. Die Richtung in der Umgebungskarte wird mit Hilfe einer Winkelkoordinate, vorzugsweise mit Hilfe von Polarkoordinaten, definiert. Für die Detektion der Bodenparameter sowie die Erstellung der Umgebungskarte kann ein Erkundungsmodus des Bodenbearbeitungsgerätes durchgeführt werden, bei welchem das Bodenbearbeitungsgerät ohne Ausführung von Bodenbearbeitungstätigkeiten in der Umgebung fährt und dort die Parameter der Bodenfläche erfasst bzw. gegebenenfalls noch zusätzlich in der Umgebung vorhandene Hindernisse, die ebenfalls zur Erstellung der Umgebungskarte verwendet werden können, ermittelt. Alternativ ist es möglich, die Parameter der Bodenfläche und gegebenenfalls die Hindernisdaten während der Ausführung einer oder mehrerer Bodenbearbeitungstätigkeiten zu detektieren. In jedem Fall ist es vorteilhaft, zu beachten, dass die Bodenfläche auch ortsabhängig variierende anisotrope Eigenschaften aufweisen kann. Insbesondere bei Naturböden, aber auch in Abhängigkeit von einer Verlegungsart von Bodenflächen, kann es beispielsweise vorkommen, dass die Eigenschaften durch das Auftreten einer Naturmaserung, eines Astloches, einer Fuge, oder ähnlichem von Ort zu Ort variieren. Daher empfiehlt es sich, an verschiedenen Ortspunkten der Bodenfläche eine erfindungsgemäße Detektion von Bodenparametern in eine Vielzahl von Raumrichtungen vorzunehmen. Die Detektion in verschiedene Raumrichtungen kann dabei beispielsweise eine Rundum-Detektion über ein Sichtfeld von 360 Grad um den Ortspunkt herum sein. Die Detektion kann dabei stetig erfolgen oder lediglich in eine Mehrzahl von diskreten Richtungen, beispielsweise in vier um 90 Grad versetzte Richtungen. Diejenigen Richtungen, in welchen die Parameter der Bodenfläche gemessen werden sollen, können auf einen fixen Punkt des Bodenbearbeitungsgerätes bezogen sein, oder auf die Koordinaten der Umgebungskarte. Während der Ausführung von Bodenbearbeitungstätigkeiten kann die Auswerte- und Steuereinrichtung des Bodenbearbeitungsgerätes auch gespeicherte Parameter-Anisotropien der Bodenfläche mit einer aktuell detektierten Anisotropie des jeweiligen Parameters der Bodenfläche vergleichen. Sofern die aktuell ermittelte Anisotropie von der gespeicherten Anisotropie abweicht, kann dies beispielsweise als Existenz einer Verunreinigung auf der Bodenfläche gewertet werden. Eine solche Information kann dann beispielsweise an einen Nutzer ausgegeben werden oder zu einer automatisch gestarteten Reinigung des entsprechenden Bereiches der Bodenfläche führen. Sofern sich über einen längeren Zeitraum die Anisotropie der Bodenfläche gar nicht ändert, kann dies des Weiteren darauf hindeuten, dass der befahrene Boden verschlissen ist. Auch eine solche Information kann an den Nutzer weitergeleitet werden.

Erfindungsgemäß vollzieht das Bodenbearbeitungsgerät eine Eigenrotation um den definierten Ortspunkt, wobei es sich in einer 360 Grad-Drehung um sich selbst drehen. Dies kann ebenfalls auch an einer Vielzahl von definierten Ortspunkten der Umgebung erfolgen, insbesondere dann, wenn noch keine Information darüber besteht, ob nur eine einzige Bodenart auf der Bodenfläche vorhanden ist, oder ob mehrere Bodenarten vorliegen oder eine Bodenart selbst inhomogene Eigenschaften aufweist. Die Rotation des Bodenbearbeitungsgerätes kann im Uhrzeigersinn, gegen den Uhrzeigersinn oder auch zeitlich aufeinanderfolgend in beide Richtungen erfolgen, je nachdem ob in entgegengesetzter Richtung möglicherweise andere oder zusätzliche Informationen erlangt werden können.

Insbesondere wird vorgeschlagen, dass die Auswerte- und Steuereinrichtung eingerichtet ist, einen Mittelwert der winkelabhängigen Anisotropie aus einer Vielzahl von Detektionen an verschiedenen Ortspunkten der Umgebung zu bilden. Durch die Bildung eines Mittelwertes wird somit die Vielzahl von Detektionsergebnissen berücksichtigt, die ausgehend von verschiedenen Ortspunkten der Umgebung in eine identische Raumrichtung ermittelt wurden. Dadurch kann diejenige Raumrichtung der Umgebung ermittelt werden, in welche bevorzugt eine Fortbewegung des Bodenbearbeitungsgerätes erfolgt, weil dort beispielsweise eine reibungsarme Vorzugsrichtung für die Fahrtätigkeit oder eine Bodenbearbeitungstätigkeit des Bodenbearbeitungsgerätes besteht. Anstelle eines Mittelwertes können auch lokale Werte der Anisotropie in der Umgebungskarte gespeichert werden. Dies ist zum Beispiel für eine lokale Spotbearbeitung der Bodenfläche vorteilhaft.

Des Weiteren wird vorgeschlagen, dass die Sensorik eingerichtet ist, eine Leistungsaufnahme der Antriebseinrichtung zu detektieren. Insbesondere kann eine Änderung einer Leistungsaufnahme der Antriebseinrichtung bei der Fortbewegung des Bodenbearbeitungsgerätes gemessen werden. Die Leistungsaufnahme der Antriebseinrichtung ändert sich in Abhängigkeit von den Eigenschaften der Bodenfläche, beispielsweise dann, wenn das Bodenbearbeitungsgerät während der Fortbewegung Fugen überwinden muss oder eine Fortbewegungsrichtung so ändert, dass es plötzlich entgegen einer Florrichtung eines Teppichbodens verfährt. Die Bodenfläche setzt der Antriebseinrichtung des Bodenbearbeitungsgerätes dadurch eine Kraft entgegen, die in einer höheren Leistungsaufnahme des Antriebsmotors resultiert. Dies kann vorzugsweise ausgewertet werden, um die Anisotropie der Bodenfläche zu ermitteln, d. h. die winkelabhängigen Eigenschaften der Bodenfläche zu detektieren.

Ebenso kann die Sensorik auch eingerichtet sein, eine Leistungsaufnahme, insbesondere eine Änderung einer Leistungsaufnahme, für den Antrieb eines elektromotorisch angetriebenen Bodenbearbeitungselementes des Bodenbearbeitungsgerätes zu detektieren. Bei dem Bodenbearbeitungselement kann es sich insbesondere um ein rotierend oder schwingend angetriebenes Bodenbearbeitungselement, wie beispielsweise eine schwingende Wischplatte oder ein rotierendes Borstenelement, handeln. Des Weiteren kann ein elektromotorisch angetriebenes Bodenbearbeitungselement auch ein Gebläse sein, mit welchem beispielsweise Staub von einer zu reinigenden Bodenfläche aufgenommen wird. Als Messmethode zur Bestimmung einer anisotropen Eigenschaft der Bodenfläche, beispielsweise eines Reibkoeffizienten, kann somit der Leistungsverbrauch einer Antriebseinrichtung oder einer Bodenbearbeitungseinheit ausgewertet werden. Somit kann für jeden Ortspunkt der Umgebung ermittelt werden, in welcher Richtung welche Bodeneigenschaften vorliegen. Mit der vorgeschlagenen direkten Detektion über eine Leistungsänderung wird der Umstand genutzt, dass sich die Leistungsaufnahme des elektrischen Verbrauchers, der für den Antrieb sorgt, verändert, wenn verschiedene Eigenschaften der Bodenflächen bestehen. Es verändert sich somit beispielsweise die Leistungsaufnahme eines Antriebs für Rollen, Bürsten, aktiv angetriebene Reinigungspads und Antriebsräder, aber auch die Leistungsaufnahme eines Gebläses. Die detektierten Messwerte können Stromwerte, Spannungswerte, Leistungswerte sein, jedoch auch ein Phasenwinkel oder Schlupf.

Des Weiteren kann die Sensorik ein Mikrophon aufweisen, welches eingerichtet ist, durch Überfahren der Bodenfläche mittels des Bodenbearbeitungsgerätes erzeugte Geräusche zu detektieren. Bei dieser Detektionsart wird der Umstand genutzt, dass verschiedene Reibungseigenschaften der Bodenfläche in unterschiedlichen Raumrichtungen auch andere Geräusche erzeugen, weil beispielsweise die Räder des Bodenbearbeitungsgerätes in bestimmten Fortbewegungsrichtungen einen größeren Reibwiderstand überwinden müssen. Dadurch können die entstehenden Geräusche lauter oder leiser werden oder auch eine andere Frequenz haben. Die Geräusche werden mittels des Mikrophons aufgezeichnet und dann durch die Auswerte- und Steuereinrichtung in Bezug auf die Fortbewegungsrichtung ausgewertet.

Des Weiteren kann vorgesehen sein, dass die Sensorik eingerichtet ist, eine Eigenschwingung eines Geräteteilbereiches des Bodenbearbeitungsgerätes zu detektieren. Insbesondere kann eine Änderung einer Eigenschwingung eines Geräteteilbereiches des Bodenbearbeitungsgerätes detektiert werden. Die Sensorik kann vorzugsweise einen Beschleunigungssensor und/oder ein Gyroskop aufweisen. Bei dieser indirekten Art der Detektion werden Auswirkungen einer Bodenanisotropie ermittelt, die während des Betriebs bzw. der Fortbewegung des Bodenbearbeitungsgerätes auftreten. Während einer Fortbewegung schwingt das Bodenbearbeitungsgerät üblicherweise minimal. Durch eine Eigenschaftsänderung der Bodenfläche ändern sich diese Schwingungen des Bodenbearbeitungsgerätes bzw. einzelner Geräteteilbereiche des Bodenbearbeitungsgerätes. Diese Änderungen können dann zum Beispiel mit Hilfe eines Beschleunigungssensors und/oder eines Gyroskops detektiert werden. Die Position des Sensors an dem Bodenbearbeitungsgerät kann dabei grundsätzlich frei gewählt werden, da derartige Vibrationen üblicherweise überall in dem Bodenbearbeitungsgerät auftreten. Es wird jedoch immer zumindest eine optimale Position geben, an welcher die Schwingungen besonders stark auftreten bzw. sich besonders stark ändern. Die beste Platzierung eines solchen Sensors an dem Bodenbearbeitungsgerät wird der Fachmann ermitteln können.

Alle vorgenannten Detektionsarten können auch mit weiteren Detektionsmethoden kombiniert werden, beispielsweise durch die zusätzliche Aufnahme von Kamerabildern, die eine Struktur, insbesondere eine Vorzugsrichtung der Bodenfläche wiedergeben. Die Auswerte- und Steuereinrichtung des Bodenbearbeitungsgerätes weist dann vorzugsweise ein Bildverarbeitungsprogramm auf, um die richtungsabhängigen Eigenschaften der Bodenfläche zu ermitteln. Des Weiteren kann auch ein Schlupf von Antriebsrädern auf der Bodenfläche in unterschiedlichen Fortbewegungsrichtungen des Bodenbearbeitungsgerätes bzw. Raumrichtungen der Umgebung ermittelt werden.

Insbesondere kann vorgesehen sein, dass die Auswerte- und Steuereinrichtung eingerichtet ist, eine Strategie zur Fortbewegung des Bodenbearbeitungsgerätes innerhalb der Umgebung in Abhängigkeit von der ermittelten winkelabhängigen Anisotropie des Parameters der Bodenfläche festzulegen. Gemäß dieser vorzugsweisen Ausgestaltung wird somit ermittelt, in welcher Richtung (ausgehend von einem definierten Ortspunkt) optimale Eigenschaften für beispielsweise eine intensivste, schnellste oder energiesparsamste Reinigung oder Fortbewegung liegen. Beispielsweise kann eine Polrichtung eines Teppichbodens, d. h. eine Vorzugsrichtung der Teppichfasern, genutzt werden, um eine Fortbewegung des Bodenbearbeitungsgerätes vorzugsweise in diese Richtung vorzunehmen. Dadurch kann sich das Bodenbearbeitungsgerät besonders reibungsarm und somit energiesparend fortbewegen. Wenn das Bodenbearbeitungsgerät beispielsweise eine Saugreinigung der Bodenfläche oder eine Wischreinigung der Bodenfläche vornehmen soll, empfiehlt es sich, die Fortbewegungsstrategie so zu planen, dass die Fortbewegung und Bodenbearbeitungstätigkeit parallel zu einer Längserstreckung einer Fuge oder Maserung oder Struktur der Bodenfläche erfolgt.

Insbesondere kann die Auswerte- und Steuereinrichtung eingerichtet sein, die Strategie zur Fortbewegung zusätzlich in Abhängigkeit von der Art einer während der Fortbewegung ausgeführten Bodenbearbeitungstätigkeit festzulegen, wobei die Bodenbearbeitungstätigkeit charakterisiert ist nach einem der folgenden Parameter: Intensität der Bodenbearbeitung, Geschwindigkeit der Bodenbearbeitung, Verbrauch von Verbrauchsmaterial während der Bodenbearbeitung, Abnutzung der Bodenfläche durch die Bodenbearbeitung, Energieverbrauch während der Bodenbearbeitung. Die Fortbewegungsstrategie oder auch Bodenbearbeitungsstrategie des Bodenbearbeitungsgerätes wird somit in Abhängigkeit von den in der Umgebungskarte gespeicherten Bodeneigenschaften bestimmt. Dabei wird diejenige Strategie ermittelt, die für die jeweilige Situation am besten geeignet ist. Dabei kann es sich bei der Strategie um einen Reinigungsmodus handeln, welcher eine bestimmte Reinigungsleistung, einen bestimmten Wasserverbrauch, einen bestimmten Energieverbrauch, eine bestimmte Reinigungszeit oder ähnliches erfordert. Die Bodenfläche wird somit vorteilhaft in diejenige Richtung überfahren, welche für die gewünschte Bodenbearbeitung oder Fortbewegung am vorteilhaftesten ist. Dabei ist es möglich, einerseits mit den gemittelten richtungsabhängigen Bodeneigenschaften zu arbeiten, oder auch alternativ oder zusätzlich mit lokalen Bodeneigenschaften zu arbeiten. Insgesamt wird somit eine Fortbewegungsstrategie, insbesondere Fortbewegungsrichtung, für das Bodenbearbeitungsgerät ermittelt, in welcher besonders optimale Bodeneigenschaften vorliegen. Umgekehrt ist es auch möglich, dass eine Fortbewegung oder eine Bodenbearbeitungstätigkeit in Abhängigkeit von einer Verfahrrichtung angepasst wird, indem Eigenschaften des Bodenbearbeitungsgerätes geändert werden, beispielsweise eine Motorleistung oder ein Anpressdruck auf die Bodenfläche variiert wird. Ebenso können beispielsweise eine auf die Bodenfläche aufgebrachte Flüssigkeitsmenge oder eine Temperatur von Reinigungsmaterial, eine Drehzahl eines rotierenden Reinigungselementes, eine Schwingfrequenz eines schwingenden Wischelementes oder ähnliches angepasst werden. Darüber hinaus können Fahreigenschaften, wie Geschwindigkeit, angepasst werden.

### Kurze Beschreibung der Zeichnungen

Im Folgenden wird die Erfindung anhand von Ausführungsbeispielen näher erläutert. Es zeigen:
- Fig. 1: ein erfindungsgemäßes Bodenbearbeitungsgerät an einem Ortspunkt einer Umgebung,
- Fig. 2: eine Umgebungskarte mit einem Grundriss der Umgebung und darin vermerkten Ortspunkten,
- Fig. 3: eine spiralförmige Fortbewegungsbahn gemäß einer ersten Ausführungsform,
- Fig. 4: eine spiralförmige Fortbewegungsbahn gemäß einer weiteren Ausführungsform,
- Fig. 5: eine Umgebungskarte mit darin gespeicherten Fortbewegungsbahnen an verschiedenen Ortspunkten,
- Fig. 6: eine Umgebungskarte mit gespeicherten Richtungsangaben sowie einem geplanten Bearbeitungspfad.

### Beschreibung der Ausführungsformen

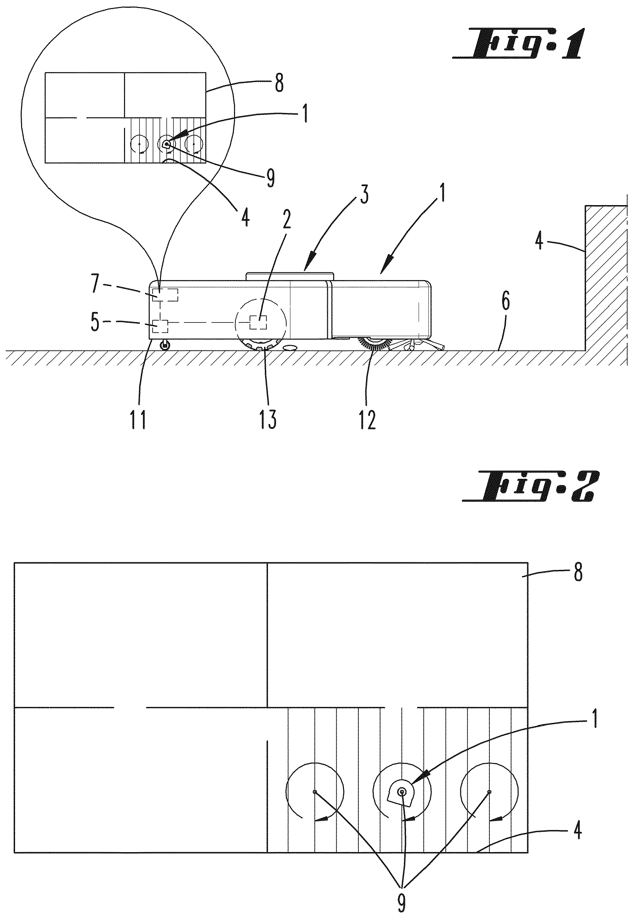

Figur 1 zeigt zunächst ein beispielhaftes sich selbsttätig fortbewegendes Bodenbearbeitungsgerät 1, welches hier beispielsweise als Reinigungsroboter ausgebildet ist. Das Bodenbearbeitungsgerät 1 verfügt über eine Antriebseinrichtung 2 in Form eines Elektromotors für motorisch angetriebene Räder 13. Der Elektromotor sowie weitere elektrische Verbraucher des Bodenbearbeitungsgerätes 1 werden durch einen hier nicht dargestellten Energiespeicher, insbesondere einen Akkumulator, mit Energie versorgt. Das Bodenbearbeitungsgerät 1 weist des Weiteren eine Hindernisdetektionseinrichtung 3 auf, welche eingerichtet ist, Abstände zu in der Umgebung des Bodenbearbeitungsgerätes 1 vorhandenen Hindernissen 4 zu detektieren. Hier ist die Hindernisdetektionseinrichtung 3 beispielsweise eine optische Abstandsmesseinrichtung in Form einer Lasertriangulationsmesseinrichtung. Die Hindernisdetektionseinrichtung 3 emittiert beispielsweise einen um 360 Grad rotierenden Laserstrahl, welcher auf Hindernisse 4 trifft und daran reflektiert wird. Anhand der reflektierten Strahlung kann auf einen Abstand des Bodenbearbeitungsgerätes 1 zu den Hindernissen 4 geschlossen werden. Die Detektionssignale der Hindernisdetektionseinrichtung 3 werden mit Hilfe einer Auswerte- und Steuereinrichtung 7 des Bodenbearbeitungsgerätes 1 zu einer Umgebungskarte 8 verarbeitet, welche einen Grundriss der Umgebung mit darin gespeicherten Hindernissen 4 sowie einer aktuellen Eigenposition des Bodenbearbeitungsgerätes 1 an einem Ortspunkt 9 enthält. Zur Bodenbearbeitung einer Bodenfläche 6 der Umgebung weist das Bodenbearbeitungsgerät 1 des Weiteren ein Bodenbearbeitungselement 12 auf, hier beispielsweise eine um eine im Wesentlichen horizontale Achse rotierende Borstenwalze. Auch dem Bodenbearbeitungselement 12 ist ein hier nicht dargestellter Elektromotor zugeordnet, welcher zum Antrieb des Bodenbearbeitungselementes 12 genutzt wird. Des Weiteren weist das Bodenbearbeitungsgerät 1 eine Sensorik 5 auf, welche ausgebildet und eingerichtet ist, einen Parameter der von dem Bodenbearbeitungsgerät 1 befahrenen Bodenfläche 6 zu detektieren. Hier ist die Sensorik 5 beispielsweise der Antriebseinrichtung 2 der Räder 13 zugeordnet. Die Sensorik 5 detektiert eine Leistungsaufnahme bzw. eine Änderung einer Leistungsaufnahme der Antriebseinrichtung 2 und kann abhängig davon einen Rückschluss auf einen oder mehrere Parameter der Bodenfläche 6 ziehen. Die Umgebungskarte 8 wird von der Auswerte- und Steuereinrichtung 7 des Bodenbearbeitungsgerätes 1 genutzt, um einen Bearbeitungspfad 14 des Bodenbearbeitungsgerätes 1 zu planen.

Die Erfindung wird nun anhand der Figuren 2 bis 6 näher erläutert.

Um einen Parameter der Bodenfläche 6 der Umgebung zu detektieren und dadurch die in der Umgebungskarte 8 gespeicherten Informationen zu verbessern, welche für eine darauf basierende Planung eines Bearbeitungspfades 14 genutzt werden, ist die Auswerte- und Steuereinrichtung 7 des Bodenbearbeitungsgerätes 1 eingerichtet, das Bodenbearbeitungsgerät 1 entlang bestimmter Fortbewegungsbahnen 10 des Bodenbearbeitungsgerätes 1 zu steuern, entlang welcher die Sensorik 5 dann Parameter der überquerten Teilbereiche der Bodenfläche 6 detektiert. In Figur 2 ist exemplarisch eine Umgebungskarte 8 mit mehreren Räumen dargestellt, wobei einer der Räume hier beispielsweise parallel verlegte Holzdielen aufweist. Um eine Information darüber zu erlangen, in welcher Richtung die Holzdielen innerhalb der Umgebung verlegt sind, steuert die Auswerte- und Steuereinrichtung 7 die Antriebseinrichtung 2 des Bodenbearbeitungsgerätes 1 derart, dass das Bodenbearbeitungsgerät 1 an hier beispielhaft drei Ortspunkten 9 eine Eigenrotation um den jeweiligen Ortspunkt 9 durchführt. Die Rotation geschieht hier lediglich beispielhaft im Uhrzeigersinn, kann jedoch alternativ oder zusätzlich auch gegen den Uhrzeigersinn erfolgen. Während der Eigenrotation des Bodenbearbeitungsgerätes 1 detektiert die Sensorik 5 eine Leistungsaufnahme der Antriebseinrichtung 2 für die Räder 13 des Bodenbearbeitungsgerätes 1. Die Leistung wird dabei bezogen auf jeden Ortspunkt 9 einzeln in Abhängigkeit von einem aktuellen Rotationswinkel des Bodenbearbeitungsgerätes 1 um den Ortspunkt 9 gespeichert. Dann wertet die Auswerte- und Steuereinrichtung 7 die ermittelte Leistungsaufnahme oder Änderung der Leistungsaufnahme in Abhängigkeit von dem zugeordneten Rotationswinkel des Bodenbearbeitungsgerätes 1 aus und speichert die ermittelte winkelabhängige Anisotropie der Bodenfläche 6 für den detektierten Parameter "Leistungsaufnahme". Auf diese Art und Weise kann zu jedem Ortspunkt 9 ein winkelabhängiger Betrag des jeweiligen Messparameters gespeichert werden, wobei alternativ oder zusätzlich zu dem Messparameter "Leistungsaufnahme" auch noch andere Messparameter, die in Abhängigkeit von den Eigenschaften der Bodenfläche 6 variieren, detektiert werden können. Alternativ zu einer detektierten Leistungsaufnahme der Antriebseinrichtung 2 der Räder 13 kann beispielsweise auch eine Leistungsaufnahme einer Antriebseinrichtung für das Bodenbearbeitungselement 12 betrachtet werden. Darüber hinaus kann die Sensorik 5 auch eingerichtet sein, eine Eigenschwingung eines Geräteteilbereiches 11 zu detektieren, welcher das Bodenbearbeitungsgerät 1 bzw. dessen Geräteteilbereich 11 aufgrund der Rotation um den Ortspunkt 9 und der jeweiligen winkelabhängigen Struktur der Bodenfläche 6 ausgesetzt ist. Die Eigenschwingung des Geräteteilbereichs 11 kann insbesondere durch einen Beschleunigungssensor oder ein Gyroskop detektiert werden. Obwohl dies hier nicht weiter dargestellt ist, können darüber hinaus auch weitere oder zusätzliche Arten von Sensorik 5 zur Anwendung kommen. Beispielsweise kann die Sensorik 5 ein Mikrophon aufweisen, welches eingerichtet ist, Geräusche zu detektieren, die bei einem Überfahren der Bodenfläche 6 durch das Bodenbearbeitungsgerät 1 erzeugt werden. Bei dieser Art der indirekten Detektion werden die Eigenschwingungen und/oder Geräusche des Bodenbearbeitungsgerätes 1 genutzt, die bei einer Fortbewegung oder Rotation um den Ortspunkt 9 auftreten und sich abhängig von den Eigenschaften der Bodenfläche 6 ändern. Die Position für die Sensorik 5 zur Detektion von Eigenschwingungen kann grundsätzlich an jedem Geräteteilbereich 11 des Bodenbearbeitungsgerätes 1 ausgewählt werden. Je nach der Bauart des Bodenbearbeitungsgerätes 1 wird der Fachmann denjenigen Geräteteilbereich 11 auffinden, welcher besonders sensibel auf Eigenschaftsänderungen der Bodenfläche 6 reagiert, d. h. denjenigen Geräteteilbereich 11, welcher besonders deutlich eine Änderung der Frequenz der Eigenschwingung in Abhängigkeit von der Fortbewegungsrichtung des Bodenbearbeitungsgerätes 1 auf der Bodenfläche 6 zeigt.

Das Bodenbearbeitungsgerät 1 kann entweder während der Ausführung einer Bodenbearbeitungstätigkeit um den Ortspunkt 9 rotieren oder dies im Rahmen eines Erkundungsbetriebs tun. Sofern gleichzeitig eine Bodenbearbeitungstätigkeit ausgeführt wird, beispielsweise unter Verwendung eines Bodenbearbeitungselementes 12, können insbesondere auch Messparameter angewendet werden, welche von der Art einer Bodenbearbeitungstätigkeit abhängen, nämlich beispielsweise wenn das Bodenbearbeitungsgerät 1 eine Flüssigkeit auf die Bodenfläche 6 aufbringt, die Bodenfläche 6 absaugt oder ähnliches. Dabei kann dann winkelabhängig nicht nur beispielsweise eine Leistungsänderung einer Antriebseinrichtung 2 für das Bodenbearbeitungselement 12 aufgrund der Änderung eines Reibkoeffizienten der Bodenfläche 6 detektiert werden, sondern beispielsweise auch eine winkelabhängige Wasserabsorption eines Bodenbelags oder Luftdurchlässigkeit der Bodenfläche 6. Dadurch kann zusätzlich ausgehend von jedem Ortspunkt 9 der Bodenfläche 6 ermittelt werden, in welcher Richtung ausgehend von dem Ortspunkt 9 ideale Parameter für eine reibungsarme Fortbewegung, flüssigkeitssparsame Bodenbearbeitung oder ähnliches vorliegen. Dadurch können ortsabhängig auch winkelabhängige Profile erstellt werden, welche den Parameter der Bodenfläche 6 bezogen auf eine bestimmte Bodenbearbeitungstätigkeit angeben. Ausgehend davon kann eine besonders vorteilhafte Fortbewegungsstrategie für das Bodenbearbeitungsgerät 1 während einer bestimmten Bodenbearbeitungstätigkeit ermittelt werden. In dem konkreten Beispiel der Figur 2 kann beispielsweise bezogen auf jeden Ortspunkt 9 ein winkelabhängiges Profil der Bodenfläche 6 erstellt werden, welches sich auf eine möglichst reibungsarme Fortbewegung des Bodenbearbeitungsgerätes 1 auf der Bodenfläche 6 bezieht. Da es sich hier beispielsweise um parallel verlegte Holzdielen handelt, erfährt das Bodenbearbeitungsgerät 1 bei seiner Rotation einen größeren Widerstand, wenn die Abrollrichtung der Räder 13 orthogonal zu den Fugen steht, die zwischen parallel verlegten Holzdielen verlaufen. Entsprechend ist der Reibwiderstand geringer, wenn die Räder 13 parallel zu der Längserstreckung der dargestellten Holzdielen rotieren. Zusätzlich oder alternativ kann der Reibwiderstand auch erhöht sein, wenn die Räder 13 orthogonal zu einer Maserungsrichtung der Holzstruktur stehen. Der jeweilige winkelabhängige Widerstand macht sich durch die Leistungsaufnahme bzw. Änderung der Leistungsaufnahme der Antriebseinrichtung 2 bemerkbar.

Aus mehreren winkelabhängigen Profilen an verschiedenen Ortspunkten 9 der Bodenfläche 6, welche die Anisotropie des betrachteten Parameters der Bodenfläche 6 angeben, wird dann unter Kenntnis des jeweiligen aktuellen Ortes des Bodenbearbeitungsgerätes 1 an dem Ortspunkt 9 sowie der jeweiligen Orientierung des Bodenbearbeitungsgerätes 1 eine winkelabhängige Gesamtstruktur der Bodenfläche 6 errechnet. Graphisch dargestellt kann dies beispielsweise der streifenartigen Struktur der verlegten Holzdielen entsprechen.

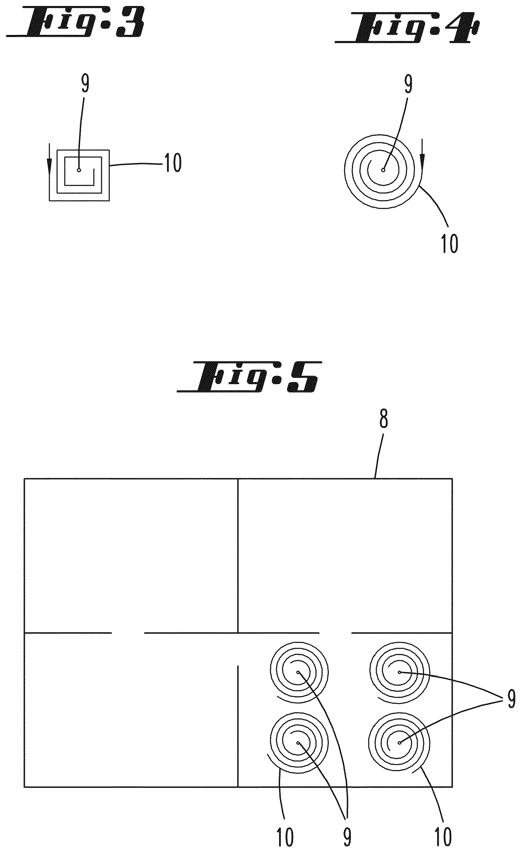

Die Figuren 3 und 4 zeigen zwei verschiedene Arten von spiralförmigen Fortbewegungsbahnen 10, welche das Bodenbearbeitungsgerät 1 alternativ zu einer Rotation an dem Ortspunkt 9 ausführen kann, um anisotrope Eigenschaften der Bodenfläche 6 zu detektieren. Figur 3 zeigt eine rechteckige spiralförmige Fortbewegungsbahn 10 gegen den Uhrzeigersinn, während Figur 4 eine kreisförmige spiralförmige Fortbewegungsbahn 10 im Uhrzeigersinn beschreibt. Selbstverständlich ist es auch möglich, dass die Rechteckform im Uhrzeigersinn durchfahren wird und die Kreisform gegen den Uhrzeigersinn. Die Fortbewegungsbahn 10 kann die gesamte Bodenfläche 6 umfassen, oder beispielsweise nur einen bestimmten Teilbereich einer Bodenfläche 6. Alternativ ist es auch möglich, wie in Figur 5 dargestellt, mehrere spiralförmige Fortbewegungsbahnen 10 um verschiedene Ortspunkte 9 der Bodenfläche 6 abzufahren. Die während der Fortbewegung ermittelten, von dem Winkel der jeweiligen Orientierung des Bodenbearbeitungsgerätes 1 abhängigen, Detektionswerte des Parameters können dann ebenso wieder für mehrere verschiedene Ortspunkte 9 und/ oder verschiedene Punkte auf der spiralförmigen Fortbewegungsbahn 10 gemittelt werden.

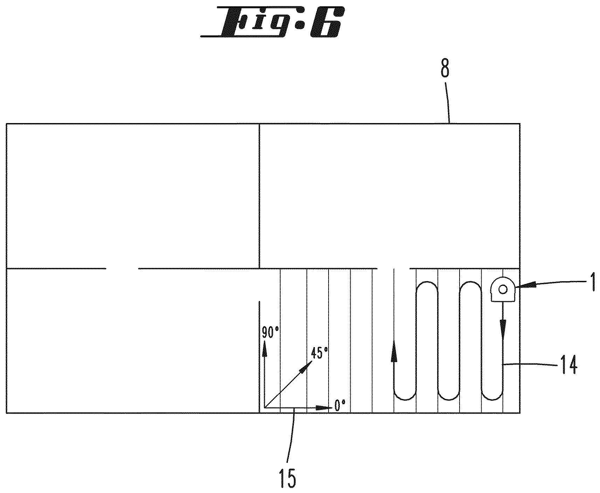

Wie in Figur 6 dargestellt, werden die winkelabhängigen Parameter der Bodenfläche 6 mit Richtungsangaben 15 in der Umgebungskarte 8 vermerkt, wobei die Richtungsangabe 15 hier eine Winkelangabe von 0 Grad bis 90 Grad enthält und grundsätzlich einen beliebigen Ursprung aufweisen kann, hier lediglich beispielhaft einen Ursprung in einer Ecke eines Raumes des Grundrisses. Der winkelabhängig dargestellte Parameter ergibt sich hier entsprechend der Verlegungsrichtung der Holzdielen als Muster mit parallel zueinander verlaufenden Streifen, wobei jeder Streifen in 90 Grad-Richtung verläuft und diejenige Fahrtrichtung oder Bodenbearbeitungsrichtung angibt, entlang welcher das Bodenbearbeitungsgerät 1 besonders energiesparend und/oder schnell arbeiten kann. Orthogonal dazu, d. h. in eine Richtung mit der Richtungsangabe 15 "0 Grad" ist die Bodenbearbeitung bzw. Fortbewegung des Bodenbearbeitungsgerätes 1 dadurch erschwert, dass das Bodenbearbeitungsgerät 1 die Fugen zwischen den parallel verlegten Holzdielen überwinden muss.

Unter Kenntnis der in der Umgebungskarte 8 verzeichneten Richtungsangabe 15 kann die Auswerte- und Steuereinrichtung 7 des Bodenbearbeitungsgerätes 1 daraufhin einen Bearbeitungspfad 14 für das Bodenbearbeitungsgerät 1 planen, entlang dessen das Bodenbearbeitungsgerät 1 besonders vorzugsweise verfährt und seine Bodenbearbeitungstätigkeit ausführt. Ein derartiger Bearbeitungspfad 14 ist hier beispielhaft in der Figur 6 dargestellt und verläuft mäanderförmig, wobei die großen geradlinigen Anteile des Mäanders parallel zu den Fugen der Holzdielen ausgerichtet sind, was gleichzeitig derjenigen Richtung auf der Bodenfläche 6 entspricht, in welcher die Bodenfläche 6 von dem Bodenbearbeitungsgerät 1 besonders reibungsarm und damit energiesparend überwunden bzw. bearbeitet werden kann.

Die von der Auswerte und Steuereinrichtung 7 ermittelte Strategie zur Fortbewegung des Bodenbearbeitungsgerätes 1 kann auch unter Nutzung anderer detektierter Parameter der Bodenfläche 6 bestimmt werden, beispielsweise wie hoch ein Verbrauch von Verbrauchsmaterial während einer Bodenbearbeitung entlang einer vorgegebenen Richtung ist, wie stark die Abnutzung der Bodenfläche 6 in eine bestimmte Richtung der Bodenfläche 6 ist, wie gut das erreichte Bodenbearbeitungsergebnis in einer bestimmten Richtung ist, oder andere.

### Liste der Bezugszeichen

- 1: Bodenbearbeitungsgerät
- 2: Antriebseinrichtung
- 3: Hindernisdetektionseinrichtung
- 4: Hindernis
- 5: Sensorik
- 6: Bodenfläche
- 7: Auswerte- und Steuereinrichtung
- 8: Umgebungskarte
- 9: Ortspunkt
- 10: Fortbewegungsbahn
- 11: Geräteteilbereich
- 12: Bodenbearbeitungselement
- 13: Rad
- 14: Bearbeitungspfad
- 15: Richtungsangabe

## Patentansprüche

1. Sich selbsttätig fortbewegendes Bodenbearbeitungsgerät (1) mit einer elektromotorischen Antriebseinrichtung (2) zur Fortbewegung des Bodenbearbeitungsgerätes (1) innerhalb einer Umgebung, einer Hindernisdetektionseinrichtung (3) zur Detektion von Hindernissen (4) in der Umgebung, einer Sensorik (5) zur Detektion eines Parameters einer von dem Bodenbearbeitungsgerät (1) befahrenen Bodenfläche (6) und einer Auswerte- und Steuereinrichtung (7) zum Erstellen einer Umgebungskarte (8) aus den detektierten Hindernisdaten und den Parametern, wobei die Auswerte- und Steuereinrichtung (7) eingerichtet ist, die Antriebseinrichtung (2) des Bodenbearbeitungsgerätes (1) so zu steuern, dass das Bodenbearbeitungsgerät (1) um einen definierten Ortspunkt (9) der Bodenfläche (6) rotiert, wobei das Bodenbearbeitungsgerät (1) eine Eigenrotation um den definierten Ortspunkt (9) vollzieht und sich in einer 360 Grad-Drehung um sich selbst dreht, und wobei die Auswerte- und Steuereinrichtung (7) des Weiteren eingerichtet ist, den mittels der Sensorik (5) während der Eigenrotation des Bodenbearbeitungsgerätes (1) um den definierten Ortspunkt (9) der Bodenfläche (6) herum detektierten Parameter auszuwerten und eine Anisotropie des Parameters der Bodenfläche (6) bezogen auf definierte unterschiedliche Raumrichtungen der Umgebung zu ermitteln und unter Angabe einer Winkelkoordinate in die Umgebungskarte (8) einzutragen.

2. Bodenbearbeitungsgerät (1) nach Anspruch 1, **dadurch gekennzeichnet, dass** die Auswerte- und Steuereinrichtung (7) eingerichtet ist, einen Mittelwert der winkelabhängigen Anisotropie aus einer Vielzahl von Detektionen an verschiedenen Ortspunkten (9) der Umgebung zu bilden.

3. Bodenbearbeitungsgerät (1) nach einem der vorhergehenden Ansprüche, **dadurch gekennzeichnet, dass** die Sensorik (5) eingerichtet ist, eine Leistungsaufnahme, insbesondere eine Änderung einer Leistungsaufnahme, der Antriebseinrichtung (2) zu detektieren.

4. Bodenbearbeitungsgerät (1) nach einem der vorhergehenden Ansprüche, **dadurch gekennzeichnet, dass** die Sensorik (5) eingerichtet ist, eine Leistungsaufnahme, insbesondere eine Änderung einer Leistungsaufnahme, für den Antrieb eines elektromotorisch angetriebenen, insbesondere rotierend oder schwingend angetriebenen, Bodenbearbeitungselementes (11) des Bodenbearbeitungsgerätes (1) zu detektieren.

5. Bodenbearbeitungsgerät (1) nach einem der vorhergehenden Ansprüche, **dadurch gekennzeichnet, dass** die Sensorik (5) ein Mikrophon aufweist, welches eingerichtet ist, durch Überfahren der Bodenfläche (6) mittels des Bodenbearbeitungsgerätes (1) erzeugte Geräusche zu detektieren.

6. Bodenbearbeitungsgerät (1) nach einem der vorhergehenden Ansprüche, **dadurch gekennzeichnet, dass** die Sensorik (5) eingerichtet ist, eine Eigenschwingung, insbesondere eine Änderung einer Eigenschwingung, eines Geräteteilbereiches (11) des Bodenbearbeitungsgerätes (1) zu detektieren, wobei die Sensorik (5) insbesondere einen Beschleunigungssensor und/oder ein Gyroskop aufweist.

7. Bodenbearbeitungsgerät (1) nach einem der vorhergehenden Ansprüche, **dadurch gekennzeichnet, dass** die Auswerte- und Steuereinrichtung (7) eingerichtet ist, eine Strategie zur Fortbewegung des Bodenbearbeitungsgerätes (1) innerhalb der Umgebung in Abhängigkeit von der ermittelten winkelabhängigen Anisotropie des Parameters der Bodenfläche (6) festzulegen.

8. Bodenbearbeitungsgerät (1) nach Anspruch 7, **dadurch gekennzeichnet, dass** die Auswerte- und Steuereinrichtung eingerichtet ist, die Strategie zur Fortbewegung zusätzlich in Abhängigkeit von der Art einer während der Fortbewegung ausgeführten Bodenbearbeitungstätigkeit festzulegen, wobei die Bodenbearbeitungstätigkeit charakterisiert ist nach einem der folgenden Parameter: Intensität der Bodenbearbeitung, Geschwindigkeit der Bodenbearbeitung, Verbrauch von Verbrauchsmaterial während der Bodenbearbeitung, Abnutzung der Bodenfläche (6) durch die Bodenbearbeitung, Energieverbrauch während der Bodenbearbeitung.

## Claims

1. Automatically moving floor processing device (1) with an electromotive drive device (2) for moving the floor processing device (1) within an environment, an obstacle detection device (3) for detecting obstacles (4) in the environment, a sensor system (5) for detecting a parameter of a floor surface (6) traversed by the floor processing device (1) and an evaluation and control device (7) for creating a map (8) of the surroundings from the detected obstacle data and the parameters, the evaluation and control device (7) being set up to control the drive device (2) of the floor processing device (1) in such a way that the floor processing device (1) rotates about a defined location point (9) of the floor surface (6), wherein the floor processing device (1) performs a rotation of its own about the defined location point (9) and rotates about itself in a 360 degree rotation, and wherein the evaluation and control device (7) is furthermore arranged evaluating the parameter detected by means of the sensor system (5) during the self-rotation of the floor processing device (1) around the defined local point (9) of the floor surface (6) and determining an anisotropy of the parameter of the floor surface (6) in relation to defined different spatial directions of the environment and entering it in the environment map (8), indicating an angular coordinate.

2. Floor processing device (1) according to claim 1, **characterized in that** the evaluation and control device (7) is set up to form an average value of the angle-dependent anisotropy from a plurality of detections at different location points (9) in the environment.

3. Floor processing device (1) according to one of the preceding claims, **characterized in that** the sensor system (5) is set up to detect a power consumption, in particular a change in a power consumption, of the drive device (2).

4. Floor processing device (1) according to one of the preceding claims, **characterized in that** the sensor system (5) is set up to detect a power consumption, in particular a change in a power consumption, for the drive of an electric motor-driven, in particular rotatingly or oscillatingly driven, floor processing element (11) of the floor processing device (1).

5. Floor processing device (1) according to one of the preceding claims, **characterized in that** the sensor system (5) has a microphone, which is set up to detect noises generated by the floor processing device (1) driving over the floor surface (6).

6. Floor processing device (1) according to one of the preceding claims, **characterized in that** the sensor system (5) is set up to detect a natural oscillation, in particular a change in a natural oscillation, of an implement section (11) of the floor processing device (1), the sensor system (5) having in particular an acceleration sensor and/or a gyroscope.

7. Floor processing device (1) according to one of the preceding claims, **characterized in that** the evaluation and control device (7) is set up to determine a strategy for moving the Floor processing device (1) within the environment as a function of the determined angle-dependent anisotropy of the parameter of the floor surface (6).

8. Floor processing device (1) according to claim 7, **characterized in that** the evaluation and control device is set up to additionally determine the strategy for locomotion as a function of the type of floor processing activity carried out during the locomotion, the floor processing activity being characterized according to one of the following parameters: intensity of the floor processing, speed of the floor processing, consumption of consumables during the floor processing, wear of the floor surface (6) due to the floor processing, energy consumption during the floor processing.

## Revendications

1. Appareil de travail du sol (1) se déplaçant automatiquement avec un dispositif d'entraînement à moteur électrique (2) pour le déplacement de l'appareil de travail du sol (1) dans un environnement, un dispositif de détection d'obstacles (3) pour la détection d'obstacles (4) dans l'environnement, un système de capteurs (5) pour détecter un paramètre d'une surface de sol (6) parcourue par l'appareil de travail du sol (1) et un dispositif d'évaluation et de commande (7) pour établir une carte des environs (8) à partir des données d'obstacles détectées et des paramètres, le dispositif d'évaluation et de commande (7) étant conçu pour commander le dispositif d'entraînement (2) de l'appareil de travail du sol (1) de telle sorte, que l'appareil de travail du sol (1) tourne autour d'un point local défini (9) de la surface du sol (6), l'appareil de travail du sol (1) effectuant une rotation propre autour du point local défini (9) et tournant sur lui-même dans une rotation de 360 degrés, et le dispositif d'évaluation et de commande (7) étant en outre conçu, d'évaluer le paramètre détecté au moyen du système de capteurs (5) pendant la rotation propre de l'appareil de travail du sol (1) autour du point local défini (9) de la surface du sol (6) et de déterminer une anisotropie du paramètre de la surface du sol (6) par rapport à différentes directions spatiales définies de l'environnement et de l'inscrire dans la carte de l'environnement (8) en indiquant une coordonnée angulaire.

2. Outil de travail du sol (1) selon la revendication 1, **caractérisé en ce que** le dispositif d'évaluation et de commande (7) est conçu pour former une valeur moyenne de l'anisotropie dépendant de l'angle à partir d'une pluralité de détections en différents points locaux (9) de l'environnement.

3. Outil de travail du sol (1) selon l'une des revendications précédentes, **caractérisé en ce que** le système de capteurs (5) est conçu pour détecter une consommation de puissance, en particulier une modification d'une consommation de puissance, du dispositif d'entraînement (2).

4. Appareil de travail du sol (1) selon l'une des revendications précédentes, **caractérisé en ce que** le système de capteurs (5) est conçu pour détecter une consommation de puissance, en particulier une modification d'une consommation de puissance, pour l'entraînement d'un élément de travail du sol (11) de l'appareil de travail du sol (1) entraîné par un moteur électrique, en particulier entraîné en rotation ou en oscillation.

5. Outil de travail du sol (1) selon l'une des revendications précédentes, **caractérisé en ce que** le système de capteurs (5) comporte un microphone qui est agencé pour détecter des bruits générés par le passage de l'outil de travail du sol (1) sur la surface du sol (6).

6. Appareil de travail du sol (1) selon l'une des revendications précédentes, **caractérisé en ce que** le système de capteurs (5) est conçu pour détecter une oscillation propre, en particulier une modification d'une oscillation propre, d'une zone partielle (11) de l'appareil de travail du sol (1), le système de capteurs (5) présentant en particulier un capteur d'accélération et/ou un gyroscope.

7. Appareil de travail du sol (1) selon l'une des revendications précédentes, **caractérisé en ce que** le dispositif d'évaluation et de commande (7) est conçu pour définir une stratégie de déplacement de l'appareil de travail du sol (1) à l'intérieur de l'environnement en fonction de l'anisotropie déterminée en fonction de l'angle du paramètre de la surface du sol (6).

8. Appareil de travail du sol (1) selon la revendication 7, **caractérisé en ce que** le dispositif d'évaluation et de commande est conçu pour déterminer la stratégie de déplacement en fonction, en outre, du type d'une activité de travail du sol effectuée pendant le déplacement, l'activité de travail du sol étant caractérisée selon l'un des paramètres suivants : Intensité du travail du sol, vitesse du travail du sol, consommation de matériaux consommables pendant le travail du sol, usure de la surface du sol (6) par le travail du sol, consommation d'énergie pendant le travail du sol.
